(19) Europäisches Patentamt / European Patent Office / Office européen des brevets

(11) **EP 2 838 241 B1**

(12) **FASCICULE DE BREVET EUROPEEN**

(45) Date de publication et mention de la délivrance du brevet:
**23.08.2017 Bulletin 2017/34**

(51) Int Cl.:
*H04L 29/06* *(2006.01)*    *G06F 21/55* *(2013.01)*

(21) Numéro de dépôt: **14178515.4**

(22) Date de dépôt: **25.07.2014**

(54) **Procédé de détection d'évènements suspects dans un fichier de collecte d'informations relatives à un flux de données ; support d'enregistrement et système associés.**

Verfahren zur Erkennung von verdächtigen Ereignissen in einer Sammeldatei von Informationen über einen Datenfluss, entsprechender Datenträger und entsprechendes System

Method for detecting suspicious events in a file for collecting information relating to a data stream; associated recording medium and system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2013 FR 1301843**

(43) Date de publication de la demande:
**18.02.2015 Bulletin 2015/08**

(73) Titulaire: **Thales**
**92200 Neuilly Sur Seine (FR)**

(72) Inventeurs:
• **Huyot, Benoît**
 **92622 Gennevilliers Cedex (FR)**
• **Mabiala, Yves**
 **92622 Gennevilliers Cedex (FR)**
• **Sans, Stéphane**
 **92622 Gennevilliers Cedex (FR)**

• **Chollon, Laurent**
 **92622 Gennevilliers Cedex (FR)**

(74) Mandataire: **Lavoix**
 **2, place d'Estienne d'Orves**
 **75441 Paris Cedex 09 (FR)**

(56) Documents cités:
 **US-A1- 2010 284 283    US-B2- 8 180 886**

• **Monowar Hussain Bhuyan ET AL: "Survey on incremental approaches for network anomaly detection", International Journal of Communication Networks and Information Security (IJCNIS), 1 décembre 2011 (2011-12-01), page 226, XP055115461, Kohat Extrait de l'Internet:**
 **URL:http://search.proquest.com/docview/922 065344**

EP 2 838 241 B1

**Description**

L'invention a pour domaine celui de la sécurité des réseaux de communication, et plus particulièrement des réseaux de communication IP, tels qu'un réseau local d'entreprise.

Dans le présent document, par « paquet de données », on entend un datagramme transmis sur le réseau de communication surveillé. Un paquet comporte une partie d'entête, contenant des données permettant l'acheminement du paquet depuis un émetteur vers un destinataire à travers le réseau, ainsi qu'une partie de charge utile, contenant les données d'application, ou message, que l'émetteur souhaite partager avec le destinataire.

Dans le présent document, par « session », on entend l'ensemble des paquets de données échangés, selon un même protocole (FTP, HTTP, etc.), entre une première machine (identifiée par une adresse IP et un port) et une seconde machine (identifiée par une adresse IP et un port).

Dans ce domaine, on connait des composants logiciels de surveillance du réseau, tels que des systèmes de détection d'intrusion, aussi dénommés systèmes IDS (selon l'acronyme anglais « Intrusion Détection System »). Un tel composant est paramétré par l'éditeur, qui y incorpore un certain nombre de règles d'alerte de base, ainsi que par l'opérateur, qui définit des règles d'alerte spécifiques. Lorsque le composant détecte qu'un événement capturé sur le réseau surveillé satisfait à l'ensemble des critères d'une règle d'alerte, il consigne l'événement suspect dans une table d'une base de données. Un exemple d'un tel composant de surveillance est donné par le logiciel libre SNORT.

On connait également des composants logiciels de collecte d'informations relatives au flux de données circulant sur le réseau de communication surveillé.

Un tel composant de collecte génère périodiquement un fichier, dont chaque ligne correspond à un événement.

Pour chaque paire de machines ayant échangé au moins un paquet de données au cours de la période correspondant au fichier, un événement représente le flux élémentaire de la session de communication entre ces deux machines, au cours cette période. Ainsi, un événement correspond à l'agrégation des paquets transmis, selon un même protocole, entre deux machines au cours de la période de collecte.

Un exemple d'un tel composant de collecte est donné par le logiciel NETFLOW développé par la société CISCO SYSTEMS. Le fichier généré par ce logiciel respecte le protocole NETFLOW, dont les caractéristiques de la version 9 sont publiées dans le document RFC 3954 accessible en ligne.

L'IETF (selon l'acronyme anglais « Internet Engineering Task Force ») a généralisé le protocole NETFLOW dans la norme IPFIX (selon l'acronyme anglais « IP Flow Information Export »), définie dans les documents RFC 5101, RFC 5102 et RFC 5103 accessibles en ligne. Dans ce qui suit, on parle de « fichier NETFLOW » pour tout fichier répondant à la norme IPFIX.

Un fichier NETFLOW comporte ainsi des informations relatives à un flux élémentaire échangé entre deux machines, mais il ne comporte pas d'information indiquant si un flux élémentaire semble correspondre à une attaque ou à une intrusion sur le réseau surveillé.

On connaît par le document US 8 180 886 B2 un procédé de détection de cyber-attaques propre à détecter une modification des paramètres d'une communication par rapport à des profils acceptables, lesdits profils résultant d'un historique de l'utilisation du réseau. Le procédé de D1 comporte la réception d'une communication courante, définie au moins par des premier et second paramètres indépendants, puis l'affectation d'une première probabilité au premier paramètre (à partir d'une comparaison avec un premier profil) et une seconde probabilité au second paramètre (à partir d'une comparaison avec un second profil). La probabilité finale est déterminée par le simple produit des première et seconde probabilités. La probabilité finale est ensuite comparée à un seuil. Une action est déclenchée en fonction du résultat de cette comparaison.

Cependant, ce document de l'état de la technique ne décrit pas un système sous-jacent surveillé comportant de paramètres corrélés entre eux.

L'invention a donc pour but de répondre à ce problème en proposant un procédé permettant, sur la seule base d'au moins un fichier NETFLOW, de détecter si un évènement est suspect et de lui associer une alerte.

Pour cela, l'invention a pour objet un procédé de détection d'évènements suspects, un support d'enregistrement d'informations, et un système comportant une unité de commande programmée pour exécuter ledit procédé selon les revendications.

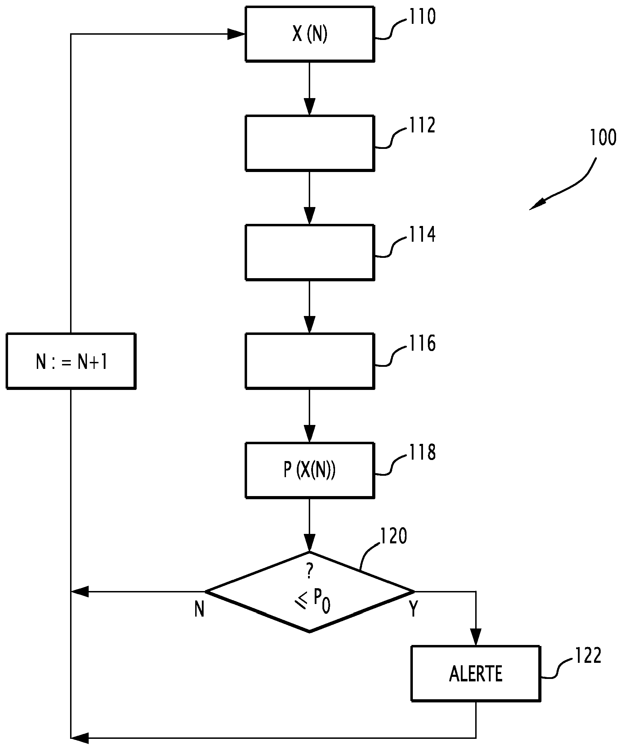

D'autres caractéristiques et avantages de l'invention ressortiront plus clairement de la description détaillée qui va suivre d'un mode de réalisation particulier, donné à titre indicatif et nullement limitatif, et faite en se référant au dessin annexé représentant schématiquement, sous forme de blocs, un mode de réalisation particulier d'un procédé de détection d'évènements suspects dans un fichier d'évènements généré par un composant logiciel de collecte d'informations relatives à un flux de données circulant sur un réseau de communications IP surveillé.

Un composant NETFLOW est implanté en un point d'un réseau local de communication IP, par exemple au niveau d'une passerelle de connexion de ce réseau local à un réseau de communication IP public, tel que l'INTERNET.

Le composant NETFLOW est propre à analyse le flux de données transitant sur la passerelle.

Le composant NETFLOW est propre à générer périodiquement un fichier NETFLOW. Par exemple, le composant NETFLOW génère un fichier NETFLOW toutes le quinze minutes.

Un fichier NETFLOW comporte des informations relatives au flux de données sur une période de surveillance qui correspond aux quinze minutes qui précèdent la création du fichier.

Les informations du fichier NETFLOW sont datées avec la date de génération du fichier NETFLOW.

Un fichier NETFLOW comporte une pluralité de lignes, chaque ligne correspondant à un évènement. Chaque ligne est identifiée par un entier n.

Chaque évènement $X(n)$ correspond à une session sur la période de surveillance, c'est-à-dire à l'agrégation des paquets échangées, selon un même protocole, entre une première machine (identifiée par son adresse IP et son port de communication) et une seconde machine (identifiée par son adresse IP et son port de communication), une machine pouvant, au cours d'une même session, fonctionner en émetteur d'un paquet ou en destinataire d'un paquet.

Dans le fichier NETFLOW, chaque évènement $X(n)$ est caractérisé par une pluralité de L paramètres $X_i(n)$.

Par exemple, dans un mode de réalisation actuel, un évènement $X(n)$ est défini par sept paramètres :

- $X_1(n)$ correspond au protocole de la quatrième couche du modèle OSI (en général égal TCP ou UDP, mais d'autres protocoles sont possibles) ;
- $X_2(n)$ correspond à l'adresse IP de la première machine ;
- $X_3(n)$ correspond à l'adresse IP de la seconde machine ;
- $X_4(n)$ correspond au port de la première machine ;
- $X_5(n)$ correspond au port de la seconde machine ;
- $X_6(n)$ correspond au nombre de paquets échangés durant la session ; et,
- $X_7(n)$ correspond au nombre d'octets échangés durant la session.

Une fois un fichier NETFLOW stocké sur un disque dur, il est accessible à un système comportant une unité de calcul, qui est programmée pour exécuter un procédé 100 de détection d'évènements suspects.

De manière générale, le procédé 100 est conçu pour permettre de détecter, dans un fichier NETFLOW, les évènements $X(n)$ anormaux ou suspects.

Un évènement est considéré comme suspect lorsque, comparativement à l'historique de l'utilisation du réseau surveillé, cet évènement correspond à une utilisation marginale du réseau.

Pour détecter ces évènements suspects, une approche probabiliste est utilisée. En effet, les probabilités permettent de quantifier le niveau de normalité d'un événement. Un évènement suspect apparaît alors comme un évènement rare, c'est-à-dire dont la probabilité d'occurrence est faible.

Ainsi, le procédé 100 comporte d'abord une estimation de la probabilité P d'occurrence d'un évènement $X$ à partir d'un échantillon constitué par des évènements $X(n)$ du fichier NETFLOW source.

Le procédé 100 comporte ensuite un calcul de la valeur de la probabilité d'occurrence d'un évènement $X(n)$ particulier, en utilisant l'estimation précédente de la probabilité P.

Enfin, le procédé 100 comporte l'étiquetage de l'évènement $X(n)$ particulier en tant qu'évènement suspect lorsque la valeur calculée de la probabilité d'occurrence satisfait à une règle d'alerte.

D'une manière générale, un estimateur d'une grandeur $G$ sera noté $\hat{G}$. Un estimateur peut être obtenu à partir d'un échantillon de N valeurs de la grandeur $G$. Il sera alors noté $\hat{G}_N$.

D'un point de vue mathématique, un évènement $X$ est une variable aléatoire multi-variée. Chaque paramètre $X_i$ d'un évènement est une variable aléatoire mono-variée.

L'estimation de la probabilité $P$ d'un évènement $X$ consiste d'abord à estimer une probabilité individuelle pour chaque paramètre $X_i$. Les probabilités individuelles $P_i$ sont souvent dénommées « probabilités marginales » de la probabilité $P$.

Lorsque le paramètre $X_i$ est une variable aléatoire qualitative, c'est-à-dire à valeur dans un ensemble discret et fini d'éléments notés $x_i^k$, alors un estimateur $\hat{P}_i$ de la probabilité individuelle $P_i$ est donné par la relation :

$$\hat{P}_{i,N}(X_i = x_i^k) = \frac{1}{N}\sum_{n=1}^{N} 1_{X_i(n)=x_i^k} \qquad (1)$$

où $N$ est le nombre d'évènements pris en compte dans l'estimation; et $1_{X_i(n)=x_i^k}$ est la fonction indicatrice, elle vaut 1 lorsque sa condition est réalisée, 0 sinon

Selon la relation (1), il s'agit de compter le nombre d'évènements du fichier NETFLOW pour lesquels

$X_i(n) = x_i^{\ k}$ , ramené à la longueur $N$ de l'historique.

Dans une mise en oeuvre incrémentale, permettant de mettre à jour les différents estimateurs pour tenir compte d'un nouvel évènement $X(N)$ du fichier NETFLOW, la relation (1) devient :

$$\hat{P}_{i,N}(X_i = x_i^{\ k}) = \frac{N-1}{N}\hat{P}_{i,N-1} + \frac{1}{N}1_{X_i(n)=x_i^{\ k}} \qquad (1')$$

Lorsque le paramètre $X_i$ est une variable aléatoire quantitative, c'est-à-dire à valeur dans un ensemble continu, la procédure qui est utilisée pour estimer la probabilité individuelle $P_i$, qui est alors une fonction continue de $X_i$, met en oeuvre un estimateur dit « à noyau ».

Plus particulièrement, dans le présent mode de réalisation, l'estimateur à noyau mis en oeuvre est celui dit de Parzen-Rozenblatt.

L'estimateur $\hat{P}_i$ est donné par la relation suivante :

$$\hat{P}_{i,N}(X_i = x_i) = \frac{1}{N\hat{h}_{i,N}}\sum_{n=1}^{N} K\left(\frac{[x_i - x_i(n)]}{\hat{h}_{i,N}}\right) \qquad (2)$$

Où $N$ est le nombre d'évènements pris en compte dans l'estimation ; $x_i(n)$, la valeur du paramètre $X_i$ pour la nième observation , $X_i(n)$ ; $K$ est une fonction de noyau ; et $\hat{h}_{i,N}$, une estimation sur un échantillon de N évènements, d'un paramètre de lissage $h_i$.

Ou encore, dans une mise en oeuvre incrémentale par la relation :

$$\hat{P}_{i,N}(X_i = x_i) = \frac{N-1}{N}\hat{P}_{i,N-1} + \frac{1}{N\hat{h}_{i,N}}K\left(\frac{[x_i - x_i(N)]}{\hat{h}_{i,N}}\right) \qquad (2')$$

La fonction de noyau $K$ est choisie comme étant une fonction gaussienne standard, c'est-à-dire à espérance nulle et à variance unitaire :

$$K(t) = \frac{1}{\sqrt{2\pi}}e^{-\frac{1}{2}t^2}$$

Le paramètre de lissage $h_i$ est obtenu en utilisant la relation usuellement associée à ce noyau :

$$h_i = 1{,}06.\sigma_i.N^{-\frac{1}{5}}$$

où $\sigma_i$ est l'écart type de la distribution des $X_i(n)$, qui est égal à la racine carrée de la variance $V_i$ de cette distribution.

L'estimateur $\hat{h}_{i,N}$ est ainsi déterminé au moyen d'une estimation de la variance $\hat{V}_{i,N}$, donnée par la relation suivante, qui correspond à un estimateur sans biais:

$$\hat{V}_{i,N} = \frac{1}{N-1}\left(\sum_{n=1}^{N}\left[X_i(n) - \hat{\bar{X}}_{i,N}\right]^2\right) \qquad (3)$$

où $\overline{X}_i$ est la valeur moyenne de la variable aléatoire $X_i$, dont une estimation est donnée par :

$$\hat{\bar{X}}_{i,N} = \frac{1}{N}\sum_{n=1}^{N} X_i(n)$$

Pour une mise à jour incrémentale, la relation (3) devient :

$$\hat{V}_{i,N} = \frac{N-2}{N-1}\left(\hat{V}_{i,N-1} + (X_i(N) - \overline{X}_i)^2\right) \tag{3'}$$

Une fois les estimateurs $\hat{P}_{i,N}$ des probabilités individuelles obtenus, il s'agit d'estimer la probabilité $P$ globale.

Les variables aléatoires $X_i$ ne sont pas indépendantes entre elles, de sorte que la probabilité $P$ de la variable $X$ n'est pas le simple produit des probabilités individuelles $P_i$.

Pour estimer la dépendance entre les variables aléatoires $X_i$, la notion de copule est utilisée.

De manière générale, pour une variable $X$ deux-variée dans les variables $X_1$ et $X_2$ la fonction de copule C permet d'écrire :

$$F(X) = C(F_1(X_1); F_2(X_2))$$

Où, de manière générale, F désigne la fonction de répartition de la variable $X$ de probabilité $P$, définie par :

$$F(X) = \int_0^X P(X')dX'$$

Dans le mode de réalisation actuellement envisagé, est utilisée la copule de Farlie-Gumbel-Morgenstern, dont l'expression mathématique est donnée par la relation suivante :

$$C(F_1(X_1); F_2(X_2)) = F_1(X_1).F_2(X_2).(1 + \theta(1 - F_1(X_1))(1 - F_2(X_2)))$$

dans laquelle le couplage entre les variables $X_1$ et $X_2$ est faible, et la copule correspond à une approximation à l'ordre un de l'équation aux dérivées partielles modélisant la dépendance entre les deux variables. Toute l'information relative à la dépendance entre les variables $X_1$ et $X_2$ se trouve dans le paramètre $\theta$.

Dans le cas présent, où la variable aléatoire $X$ est L-variée (avec L valant 7), l'approche précédente conduit à l'expression :

$$F(X) = C(F_1(X_1); F_2(X_2); ...; F_i(X_i); ...; F_L(X_L))$$

Soit

$$F(X) = (\prod_{i=1}^{L} F_i(X_i))(1 + \sum_{i,j \neq i} \theta_{ij}(1 - F_i(X_i))(1 - F_j(X_j))) \tag{4}$$

Cette approche permet de simplifier les calculs, et de résumer l'information de dépendance entre les paramètres $X_i$ d'un évènement $X$ par un petit nombre de paramètres $\theta_{ij}$ (L valant 7, 21 paramètres $\theta_{ij}$ sont à calculer).

L'homme du métier sait que chaque paramètre $\theta_{ij}$ est lié à la notion de corrélation $\rho_{ij}$ au sens des rangs de Spearman, selon la relation :

$$\theta_{ij} = 3\rho_{ij}$$

où $\rho_{ij}$ est un coefficient de corrélation linéaire, non pas entre les variables $X_i$ et $X_j$, mais entre les fonctions de répartition $F_i$ et $F_j$ des variables $X_i$ et $X_j$.

Ainsi, compte tenu de la relation connue entre un coefficient linéaire et la variance, on a :

$$\theta_{ij} = 3 \frac{V(F_i(X_i) + F_j(X_j)) - V(F_i(X_i)) - V(F_j(X_j))}{2\sqrt{V(F_i(X_i))V(F_j(X_j))}} \qquad (5)$$

Pour pouvoir mettre à jour une estimation de chaque paramètre $\theta_{ij}$ pour tenir compte d'un nouvel évènement $X(N)$ du fichier NETFLOW, on utilise la formule incrémentale de l'estimation de la variance V donnée par la relation (3') ci-dessus.

En se référant maintenant à la figure, le mode de réalisation du procédé 100 actuellement envisagé va être présenté.

A l'étape 110 une nouvelle ligne du fichier NETFLOW est lue. Cette ligne correspond à un nouvel évènement $X(N)$.

A l'étape 112, pour chaque paramètre $X_i$, l'estimateur de la probabilité individuelle, $\hat{P}_i$, est mis à jour en tenant compte de la valeur $X_i(N)$ du paramètre $X_i$ pour le nouvel événement $X(N)$.

Si le paramètre $X_i$ est une variable qualitative, la relation (1') est utilisée. Si le paramètre $X_i$ est une variable quantitative, la relation (2') est utilisée. Une fonction $\hat{P}_{i,N}$ est obtenue.

A l'étape 114, pour chaque paramètre $X_i$, un estimateur de la fonction de répartition individuelle, $\hat{F}_i$, est mis à jour à partir de $\hat{P}_{i,N}$ calculées à l'étape 112. Une fonction $\hat{F}_{i,N}$ est obtenue.

A l'étape 116, pour chaque paire de paramètres $X_i$ et $X_j$, un estimateur du paramètre $\theta_{ij}$ est mis à jour en utilisant la relation (5) sous une forme incrémentale et les $\hat{F}_{i,N}$ calculées à l'étape 114. Les vingt-et-un coefficient $\hat{\theta}_{i,N}$ sont obtenus.

A l'étape 118, la valeur de la probabilité d'occurrence $p(X(N))$ de l'évènement $X(N)$ est calculée en utilisant la relation (4) et les $\hat{F}_{i,N}$ et $\hat{\theta}_{i,N}$ déterminés respectivement aux étapes 114 et 116.

Puis, à l'étape 120 est vérifié si l'évènement $X(N)$ respecte une règle d'alerte.

Dans un mode de réalisation, la règle d'alerte consiste à considérer que l'évènement $X(N)$ est suspect si la valeur de la probabilité d'occurrence calculée, $p(X(N))$, est inférieure à une probabilité de référence $p_{0,N}$, qui de préférence est déterminée dynamiquement. Par exemple, $p_{0,N}$ est déterminée de manière à ce que les évènements suspects correspondent au 5% des évènements ayant les probabilités d'occurrence les plus faibles. Un tel mode de réalisation fait intervenir une méthode d'estimation des quantiles, permettant de déterminer $p_{0,N}$ à partir de l'estimation de la probabilité globale $P(X)$, c'est-à-dire de la relation (4) et les $\hat{F}_{i,N}$ et $\hat{\theta}_{i,N}$.

En variante, le nombre $N_0$ d'évènements étiquetés comme suspects à extraire du fichier NETFLOW source est prédéterminé. Ainsi, à l'étape 120, lorsque la valeur $p(X(N))$ fait partie des $N_0$ probabilités les plus faibles du fichier NETFLOW source, l'évènement $X(N)$ est étiqueté comme suspect.

A l'étape 122, lorsque l'événement $X(N)$ vérifie la règle d'alerte, la ligne correspondante du fichier NETFLOW est augmentée d'un champ Alerte prenant la valeur unité.

Puis, l'entier N est augmenté d'une unité, et les différentes étapes 110 à 122 sont exécutées sur l'évènement suivant du fichier NETFLOW source.

L'homme du métier comprendra que le présent procédé ne fait aucune hypothèse a priori sur les évènements suspects. En particulier, le présent procédé ne prévoit aucune phase préalable d'apprentissage de ce que pourrait être un évènement suspect. La seule hypothèse prise est la faiblesse de la probabilité d'occurrence des événements considérés comme des attaques.

L'homme du métier, spécialiste des probabilités, constatera que le présent procédé est particulièrement bien adapté à un évènement décrit par le mélange de variables qualitatives et de variables quantitatives.

Au cours des premières itérations du procédé, les différentes estimations évoluent rapidement. Cependant, plus la profondeur de l'historique pris en compte augmente, plus les estimateurs sont stables et plus l'étiquetage d'un évènement comme suspect est pertinent. En pratique, il faut plus d'un fichier NETFLOW pour atteindre une convergence, de sorte qu'avantageusement plusieurs fichiers NETFLOW sont parsés successivement, sans réinitialisation des estimateurs entre chaque fichier.

A l'étape 122, lorsque l'événement $X(N)$ vérifie la règle d'alerte, la ligne correspondante du fichier NETFLOW est augmentée d'un champ Alerte prenant la valeur unité.

Puis, l'entier N est augmenté d'une unité, et les différentes étapes 110 à 122 sont exécutées sur l'évènement suivant du fichier NETFLOW source.

L'homme du métier comprendra que le présent procédé ne fait aucune hypothèse a priori sur les évènements suspects. En particulier, le présent procédé ne prévoit aucune phase préalable d'apprentissage de ce que pourrait être un évènement suspect. La seule hypothèse prise est la faiblesse de la probabilité d'occurrence des événements considérés comme des attaques.

L'homme du métier, spécialiste des probabilités, constatera que le présent procédé est particulièrement bien adapté à un évènement décrit par le mélange de variables qualitatives et de variables quantitatives.

Au cours des premières itérations du procédé, les différentes estimations évoluent rapidement. Cependant, plus la profondeur de l'historique pris en compte augmente, plus les estimateurs sont stables et plus l'étiquetage d'un évènement comme suspect est pertinent. En pratique, il faut plus d'un fichier NETFLOW pour atteindre une convergence, de sorte qu'avantageusement plusieurs fichiers NETFLOW sont parsés successivement, sans réinitialisation des estimateurs entre chaque fichier.

## Revendications

1. Procédé de détection d'évènements suspects dans un fichier d'événements généré par un composant logiciel de collecte d'informations relatives à un flux de données circulant sur un réseau de communications IP, un évènement étant **caractérisé par** une pluralité de paramètres,
   le procédé comportant une étape d'estimation d'une probabilité (P) d'occurrence d'un évènement (X) à partir d'un échantillon constitué des évènements (X(n)) du fichier, et une étape d'association d'une alerte à un évènement particulier du fichier lorsque ledit évènement particulier respecte une règle d'alerte fondée sur la valeur de la probabilité d'occurrence dudit évènement particulier calculée en utilisant la probabilité d'occurrence estimée, **caractérisé en ce que** l'estimation d'une probabilité (P) d'occurrence d'un évènement comporte, pour chaque paramètre (Xi) d'un évènement (X), une étape (112) d'estimation d'une probabilité individuelle (Pi) d'occurrence dudit paramètre, considérée comme indépendante de l'estimation des autres paramètres, à partir d'un échantillon constitué par les valeurs (Xi(n)) dudit paramètre pour des évènements du fichier, et une étape (114) d'estimation d'une dépendance ($\theta_{ij}$) entre les paramètres d'un évènement.

2. Procédé selon la revendication 1, dans lequel, lorsque ledit paramètre (Xi) est assimilable à une variable aléatoire quantitative, l'estimation de la probabilité individuelle dudit paramètre met en oeuvre un estimateur à noyau.

3. Procédé selon la revendication 2, dans lequel l'estimateur à noyau mis en oeuvre est un estimateur de Parzen-Rozenblatt.

4. Procédé selon l'une quelconque des revendications 1 à 3, dans lequel l'estimation d'une dépendance entre les paramètres d'un évènement met en oeuvre une copule (C).

5. Procédé selon la revendication 4, dans laquelle la copule mise en oeuvre est une copule de Farlie-Gumbel-Morgenstern, faisant intervenir, pour chaque paire de paramètres d'un évènement, un paramètre de dépendance entre les deux paramètres de ladite paire.

6. Procédé selon la revendication 5, dans lequel le paramètre de dépendance $\theta_{ij}$ entre le paramètre $X_i$ et le paramètre $X_j$ de la copule de Farlie-Gumbel-Morgenstern est donné par la relation :

$$\theta_{ij} = 3\frac{V(F_i(X_i) + F_j(X_j)) - V(F_i(X_i)) - V(F_j(X_j))}{2\sqrt{V(F_i(X_i))V(F_j(X_j))}}$$

Où $F(Y)$ est la fonction de répartition de la variable aléatoire $Y$.

7. Procédé selon l'une quelconque des revendications précédentes, dans lequel l'estimation d'une probabilité d'occurrence d'un évènement est réalisée de manière incrémentale, en mettant à jour une estimation courante de ladite probabilité en tenant compte d'un nouvel évènement (X(N)) du fichier.

8. Procédé selon l'une quelconque des revendications 1 à 7, dans lequel l'étape (124) d'association d'une alerte à un évènement particulier du fichier consiste à calculer la probabilité d'occurrence de cet évènement particulier en utilisant la probabilité estimée et à comparer cette probailité calculée avec une probabitié de référence ($p_0$), déterminée dynamiquement à partir du fichier.

9. Procédé selon l'une quelconque des revendications 1 à 8, dans lequel le fichier d'évènements est un fichier NETFLOW.

10. Support d'enregistrement d'informations, **caractérisé en ce qu'**il comporte des instructions pour l'exécution d'un procédé conforme au procédé selon l'une quelconque des revendications 1 à 9, lorsque ces instructions sont exécutées par un calculateur électronique.

**11.** Système comportant une unité de commande, **caractérisé en ce que** ladite unité de commande est programmée pour exécuter un procédé conforme au procédé selon l'une quelconque des revendications 1 à 9.

**Patentansprüche**

**1.** Verfahren zum Detektieren von verdächtigen Ereignissen in einer Ereignisdatei, die durch eine Software-Komponente zum Sammeln von Daten in Bezug auf einen Datenfluss, der in einem Kommunikationsnetz IP zirkuliert, erzeugt wird, wobei ein Ereignis durch mehrere Parameter gekennzeichnet ist,
wobei das Verfahren einen Schritt des Schätzens einer Wahrscheinlichkeit (P) des Auftretens eines Ereignisses (X) anhand eines Abtastwerts, der aus Ereignissen ($X(n)$) der Datei gebildet ist, und einen Schritt des Zuordnens einer Warnung vor einem besonderen Ereignis der Datei, wenn das besondere Ereignis einer Warnregel gehorcht, die auf dem Wert der Wahrscheinlichkeit des Auftretens des besonderen Ereignisses beruht, das unter Verwendung der geschätzten Auftrittswahrscheinlichkeit berechnet wird, umfasst, **dadurch gekennzeichnet, dass** das Schätzen einer Wahrscheinlichkeit (P) des Auftretens eines Ereignisses für jeden Parameter ($X_i$) eines Ereignisses (X) einen Schritt (112) des Schätzens einer individuellen Wahrscheinlichkeit ($P_i$) des Auftretens des Parameters, die als unabhängig von der Schätzung der anderen Parameter angesehen wird, anhand eines Abtastwerts, der durch die Werte ($X_i(n)$) des Parameters für die Ereignisse der Datei gebildet ist, und einen Schritt (114) des Schätzens einer Abhängigkeit ($\theta_{ij}$) zwischen den Parametern eines Ereignisses umfasst.

**2.** Verfahren nach Anspruch 1, wobei dann, wenn der Parameter ($X_i$) an eine quantitative Zufallsvariable angepasst werden kann, das Schätzen der individuellen Wahrscheinlichkeit des Parameters einen Kernschätzer verwendet.

**3.** Verfahren nach Anspruch 2, wobei der Kernschätzer einen Parzen-Rozenblatt-Schätzer verwendet.

**4.** Verfahren nach einem der Ansprüche 1 bis 3, wobei das Schätzen einer Abhängigkeit zwischen den Parametern eines Ereignisses eine Kopula (C) verwendet.

**5.** Verfahren nach Anspruch 4, wobei die verwendete Kopula eine Farlie-Gumbel-Morgenstern-Kopula ist, die für jedes Paar von Parametern eines Ereignisses einen Parameter der Abhängigkeit zwischen den zwei Parametern des Paars einführt.

**6.** Verfahren nach Anspruch 5, wobei der Parameter $\theta_{ij}$ der Abhängigkeit zwischen dem Parameter $X_i$ und dem Parameter $X_j$ der Farlie-Gumbel-Morgenstern-Kopula durch die folgende Beziehung gegeben ist:

$$\theta_{ij} = 3\frac{V(F_i(X_i) + F_j(X_j)) - V(F_i(X_i)) - V(F_j(X_j))}{2\sqrt{V(F_i(X_i))V(F_j(X_j))}},$$

wobei $F(Y)$ die Verteilungsfunktion der Zufallsvariable $Y$ ist.

**7.** Verfahren nach einem der vorhergehenden Ansprüche, wobei das Schätzen einer Wahrscheinlichkeit des Auftretens eines Ereignisses inkrementell ausgeführt wird, indem eine aktuelle Schätzung der Wahrscheinlichkeit unter Berücksichtigung eines neuen Ereignisses ($X(N)$) der Datei aktualisiert wird.

**8.** Verfahren nach einem der Ansprüche 1 bis 7, wobei der Schritt (124) des Zuordnens einer Warnung zu einem bestimmten Ereignis der Datei darin besteht, die Auftrittswahrscheinlichkeit dieses bestimmten Ereignisses unter Verwendung der geschätzten Wahrscheinlichkeit zu berechnen und diese berechnete Wahrscheinlichkeit mit einer Referenzwahrscheinlichkeit ($P_0$), die anhand der Datei dynamisch bestimmt wird, zu vergleichen.

**9.** Verfahren nach einem der Ansprüche 1 bis 8, wobei die Ereignisdatei eine NETFLOW-Datei ist.

**10.** Datenaufzeichnungsträger, **dadurch gekennzeichnet, dass** er Befehle enthält, um ein Verfahren in Übereinstimmung mit dem Verfahren nach einem der Ansprüche 1 bis 9 auszuführen, wenn diese Befehle durch einen elektronischen Rechner abgearbeitet werden.

**11.** System, das eine Steuereinheit umfasst, **dadurch gekennzeichnet, dass** die Steuereinheit programmiert ist, um ein Verfahren in Übereinstimmung mit dem Verfahren nach einem der Ansprüche 1 bis 9 auszuführen.

**Claims**

**1.** A method for detecting suspicious events in an event file generated by a software component for collecting information relating to a data flow circulating on an IP communication network, an event being **characterized by** a plurality of parameters,
the method including a step for estimating a probability (P) of occurrence of an event (X) from a sample consisting of the events (X(n)) of the file, and a step for associating an alarm with a particular event of the file when said particular event complies with an alert rule based on the value of the probability of the occurrence of said particular event, calculated by using the estimated occurrence probability, **characterised in that** the estimation of a probability (P) of occurrence of an event includes, for each parameter (Xi) of an event (X), a step (112) for estimating an individual probability (Pi) of occurrence of said parameter, considered to be independent of the estimation of the other parameters, from a sample formed with the values (Xi(n)) of said parameter for events of the file, and a step (114) for estimating a dependency ($\theta_{ij}$) between the parameters of an event.

**2.** The method according to claim 1, wherein, when said parameter (Xi) may be assimilated to a quantitative random variable, the estimation of the individual probability of said parameter applies a kernel estimator.

**3.** The method according to claim 2, wherein the applied kernel estimator is a Parzen-Rozenblatt estimator.

**4.** The method according to any of claims 1 to 3, wherein the estimation of a dependency between the parameters of an event applies a copula (C).

**5.** The method according to claim 4, wherein the applied copula is a Farlie-Gumbel-Morgenstern copula, involving, for each pair of parameters of an event, a dependency parameter between the two parameters of said pair.

**6.** The method according to claim 5, wherein the dependency parameter $\theta_{ij}$ between the parameter $X_i$ and the parameter $X_j$ of the Farlie-Gumbel-Morgenstern copula is given by the relationship:

$$\theta_{ij} = 3\frac{V(F_i(X_i) + F_j(X_j)) - V(F_i(X_i)) - V(F_j(X_j))}{2\sqrt{V(F_i(X_i))V(F_j(X_j))}}$$

wherein *F(Y)* is the distribution function of the random variable *Y*.

**7.** The method according to any of the preceding claims, wherein the estimation of a probability of occurrence of an event is carried out incrementally, by updating a current estimation of said probability by taking into account a new event (X(N)) of the file.

**8.** The method according to any of claims 1 to 7, wherein the step (124) for associating an alarm with a particular event of the file consists of calculating the probability of occurrence of this particular event by using the estimated probability and by comparing this calculated probability with a reference probability ($p_0$), dynamically determined from the file.

**9.** The method according to any of claims 1 to 8, wherein the event file is a NETFLOW file.

**10.** A medium for recording data, **characterized in that** it includes instructions for executing a process compliant with the method according to any of claims 1 to 9, when these instructions are executed by an electronic computer.

**11.** A system including a control unit, **characterized in that** said control unit is programmed so as to execute a process compliant with the method according to any of claims 1 to 9.

$X (N)$ — 110

112

114

116

$N := N+1$

$P (X(N))$ — 118

120
?
$\leqslant P_0$
N      Y

ALERTE — 122

100

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8180886 B2